# FASCICULE DE BREVET EUROPEEN

(11) **EP 0 754 897 B1**
(45) Date de publication et mention de la délivrance du brevet: **20.09.2000**
(21) Numéro de dépôt: 96401582.0
(22) Date de dépôt: 17.07.1996
(51) Int. Cl.: F16L 9/12

(54) **Tuyau de transport de carburant**
Kraftstoff führendes Rohr
Fuel conducting pipe

(30) Priorité: 20.07.1995 FR 9508801
(43) Date de publication de la demande: 22.01.1997
(73) Titulaire: HUTCHINSON, 75008 Paris (FR)
(72) Inventeur: Andre, Maxime, 45220 Chateaurenard (FR)
(74) Mandataire: Ramey, Daniel

(56) Documents cités:
- EP-A- 0 618 390
- WO-A-94/29626
- DE-A- 3 820 254
- DE-C- 3 821 723
- DE-C- 4 001 126

## Description

L'invention concerne un tuyau de transport de carburant, notamment pour les véhicules automobiles, mais pouvant être utilisé également pour le transport de liquide ou de gaz dans le domaine industriel, ménager ou de la restauration par exemple.

Les tuyaux de transport de carburant ont été traditionnellement réalisés en caoutchouc, mais ils ont tendance à être remplacés par des tuyaux en matière plastique qui sont moins chers, plus légers et moins encombrants ou par des tuyaux à structure composite comprenant par exemple une ou plusieurs couches de matière plastique fluorée et une ou plusieurs couches de protection en caoutchouc ou en élastomère (voir par exemple les documents EP 0 582 301 et EP 0 582 302, WO93-21466 et WO93-25835). Toutefois, ces tuyaux à structure composite présentent en général l'inconvénient d'être relativement encombrants, en raison d'une forte épaisseur de la couche de protection en caoutchouc ou en élastomère et/ou en raison du nombre relativement important de couches constituant un tuyau.

En outre, les règlements applicables à ces tuyaux deviennent de plus en plus sévères, notamment en ce qui concerne l'imperméabilité aux carburants, et les tuyaux connus ne sont pas toujours capables de respecter les nouvelles normes, sauf si l'on utilise certaines matières très imperméables, mais très coûteuses par leur prix de revient et/ou par leur mise en oeuvre.

Il existe donc actuellement un besoin d'un tuyau de transport de carburant qui présente un progrès notable par rapport à la technique connue et qui puisse répondre aux conditions suivantes:
- faible prix de revient,
- faible encombrement,
- souplesse,
- tenue au feu,
- conduction électrique (pour éviter les décharges électro-statiques résultant d'une accumulation de charges électrostatiques par frottement du carburant sur la surface interne du tuyau),
- imperméabilité aux carburants,
- résistance aux chocs à basse température,
- résistance aux agressions physico-chimiques par des agents extérieurs,
- compatibilité avec les systèmes usuels de connexion.

L'invention a pour objet un tuyau répondant à ce besoin.

Elle propose à cet effet un tuyau de transport de carburant, en particulier pour véhicule automobile, comprenant une couche interne mince d'une matière thermoplastique ayant de bonnes propriétés d'imperméabilité et de résistance chimique aux carburants, et une couche de protection recouvrant cette couche interne, caractérisé en ce que ladite couche de protection est en matière thermoplastique réticulable.

La matière utilisée pour former la couche de protection est avantageusement du PVC ou du polyéthylène qui combine les avantages d'un caoutchouc ou d'un élastomère vulcanisable du point de vue de la tenue à la chaleur notamment, à ceux d'une matière thermoplastique au niveau de la fabrication du tuyau, celui-ci pouvant être réalisé par co-extrusion du thermoplastique de la couche interne et du thermoplastique réticulable de la couche de protection, ou bien par extrusion du thermoplastique de la couche interne et recouvrement de cette couche interne par le thermoplastique réticulable de la couche de protection (notamment co-extrusion ou extrusion sur corde).

Un tel tuyau a de bonnes caractéristiques d'imperméabilité aux carburants, de par sa couche interne en thermoplastique correctement choisi, et une bonne tenue au feu pour une épaisseur relativement faible de la couche de protection, en raison de l'utilisation d'une matière thermoplastique réticulable pour cette couche de protection.

L'épaisseur de la couche interne de matière thermoplastique peut être de l'ordre de 0,1 - 0,5 mm, l'épaisseur totale du tuyau étant de l'ordre de 1 à 3,5 mm.

La matière de la couche interne peut être un polyamide, par exemple du PA 11, du PA 12, du PA 6, du PA 66, ou un polyester, par exemple du PET ou du PBT, ou un composant fluoré tel que du PTFE, du PFA, du FEP, ... .

Avantageusement, le tuyau selon l'invention peut comprendre une couche intermédiaire d'un polymère améliorant l'adhérence entre la couche interne et la couche de protection et formant barrière à l'alcool.

Cette caractéristique présente une certaine importance dans la mesure où les nouveaux carburants peuvent avoir une teneur en alcool non négligeable.

La matière de cette couche intermédiaire est choisie parmi les polyoléfines ( par exemple polyéthylène ou polypropylène, ....), éventuellement modifiées à l'anhydride maléique, EVOH (éthylène-vinyl alcool), EVA (éthylène-vinyl acétate), les polyuréthannes, les polyesters ou toute autre matière favorisant l'adhérence.

Selon une autre caractéristique de l'invention, le tuyau peut comprendre également une couche de caoutchouc ou d'élastomère vulcanisable, recouvrant la couche précitée de protection ou interposée entre ladite couche interne et cette couche de protection.

Le caoutchouc ou l'élastomère vulcanisable peut être à base de polyéthylène chlorosulfoné (CSM), ECO, CR, NBR, H-NBR, X-NBR, POE ou EPDM par exemple.

Eventuellement, un film d'un agent adhérisant sera prévu entre la couche interne et la couche de protection.

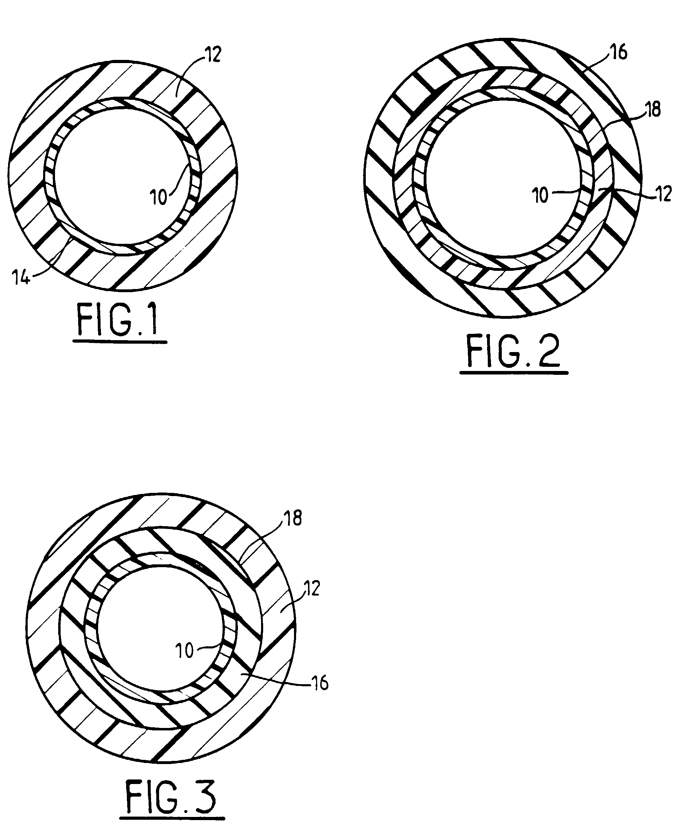

L'invention sera mieux comprise et d'autres caractéristiques, détails et avantages de celle-ci apparaîtront plus clairement à la lecture de la description qui suit, faite à titre d'exemple en référence aux dessins annexés dans lesquels les figures 1, 2 et 3 sont des vues schématiques en coupe transversale de tuyaux selon l'invention.

Ces tuyaux sont destinés notamment à être utilisés sur des véhicules automobiles, par exemple entre l'orifice de remplissage et le réservoir de carburant, ou entre le réservoir de carburant et le moteur.

Dans le mode de la réalisation de la figure 1, le tuyau selon l'invention comprend une couche interne 10 d'une matière thermoplastique, éventuellement fluorée, présentant de bonnes propriétés d'imperméabilité aux carburants, et une couche externe 12 ou couche de protection recouvrant la couche interne 10 et réalisée en une matière thermoplastique réticulable.

La matière de la couche interne 10 est avantageusement un polyamide tel par exemple que du PA 11, PA 12, PA 6 ou PA 66, un polyester tel par exemple que du ET polyéthylène téréphtalate) ou du PBT (polybutylène téréphtalate), ou un composé fluoré tel par exemple que du PTFE (polytétrafluoroéthylène), du PFA (polymère d'alcoxy-éthylène fluoré), du FEP (un copolymère d'hexafluoropropylène et de tétrafluoroéthylène), ou analogue, tout polymère thermoplastique ayant une bonne imperméabilité aux carburants pouvant être utilisé.

Pour un tuyau ayant un diamètre interne de l'ordre de 8 mm, l'épaisseur de la couche 10 peut être de l'ordre de 0,1 à 0,5 mm.

Le thermoplastique réticulable dont est constituée la couche 12 est par exemple du PVC ou du polyéthylène.

L'épaisseur totale des couches 10 et 12 est par exemple de 1 mm environ pour un tuyau ayant un diamètre interne de 8 mm.

Avantageusement, l'interface 14 entre les couches 10 et 12 peut être formée par un film d'un polymère qui améliore l'adhérence entre les couches 10 et 12 et qui forme également une barrière à l'alcool, ce polymère pouvant être une polyoléfine telle que du polyéthylène ou du polypropylène par exemple, éventuellement modifiée à l'anhydride maléique, ou un polyuréthanne ou encore un polyester par exemple.

L'épaisseur du film 14 peut être relativement très faible, par exemple de l'ordre de 0,05 à 0,1 mm.

Dans la variante de réalisation de la figure 2, la couche interne 10 et la couche 12 sont les mêmes que dans le mode de réalisation de la figure 1, et la couche 12 est recouverte d'une couche 16 d'un élastomère vulcanisable, tel qu'un polyéthylène chlorosulfoné (CSM), un copolymère d'épichlorydrine-oxyde d'éthylène-allylglycidyléther (ECO), un caoutchouc chloroprène (CR), un caoutchouc acrylonitrile-butadiène (NBR), un caoutchouc NBR hydrogéné ou halogéné (H-NBR ou X-NBR), une polyoléfine élastomère POE ou un EPDM..

L'épaisseur de la couche 16 est inférieure ou égale à 3 mm.

Eventuellement, un film d'un agent adhérisant peut être prévu à l'interface 18 entre les couches 12 et 16.

Dans la variante de réalisation de la figure 3, le tuyau comprend une couche interne 10 d'une matière thermoplastique semblable à celle des modes de réalisation des figures 1 et 2, une couche intermédiaire 16 de caoutchouc ou d'élastomère vulcanisable recouvrant cette couche interne 10, et une couche extérieure 12 de thermoplastique réticulable, les matières des couches 12 et 16 étant semblables à celle du mode de réalisation de la figure 2.

Un film d'agent adhérisant 18 tel que précité peut être prévu entre les couches 12 et 16, ainsi qu'entre les couches 10 et 16.

Comme pour le mode de réalisation de la figure 1, un film d'un polymère formant barrière à l'alcool peut être prévu entre les couches 10 et 12 (figure 2) ou entre les couches 10 et 16 (figure 3).

Les tuyaux selon l'invention ont de très bonnes caractéristiques d'imperméabilité aux carburants, de souplesse, de tenue au feu, ils ont un prix de revient modéré, leur encombrement est faible (une bonne adhérence entre les différentes couches permet d'obtenir une structure qui se comporte de façon homogène en flexion, sans délaminage), et leur tenue aux chocs et aux agressions extérieures est tout à fait satisfaisante.

Pour éviter les risques de décharge électrostatique, la couche interne 10 peut être rendue légèrement électroconductrice par incorporation au thermoplastique d'agents électroconducteurs tels que du noir de carbone ou des métaux sous forme pulvérulente.

## Revendications

1. Tuyau de transport de carburant, en particulier pour véhicule automobile, comprenant une couche interne mince (10) d'une matière thermoplastique ayant de bonnes propriétés d'imperméabilité et de résistance chimique au carburant, et une couche (12) de protection recouvrant cette couche interne, caractérisé en ce que ladite couche de protection (12) est en matière thermoplastique réticulable.

2. Tuyau selon la revendication 1, caractérisé en ce que son épaisseur totale est comprise entre 1 et 3,5 mm environ, l'épaisseur de la couche interne (10) de matière thermoplastique étant de l'ordre de 0,1-0,5 mm.

3. Tuyau selon la revendication 1 ou 2, caractérisé en ce que ladite matière thermoplastique réticulable est du PVC ou du polyéthylène.

4. Tuyau selon l'une des revendications précédentes, caractérisé en ce que la couche interne est en polyamide, par exemple PA 11, PA 12, PA 6 ou PA 66, ou bien en polyester, par exemple PET ou PBT, ou en un composé fluoré par exemple PTFE, PFA ou FEP.

5. Tuyau selon l'une des revendications précédentes, caractérisé en ce qu'il comprend une couche intermédiaire (14) d'un polymère améliorant l'adhérence entre la couche interne (10) et la couche de protection (12) et formant barrière à l'alcool.

6. Tuyau selon la revendication 5, caractérisé en ce que la matière de la couche intermédiaire (14) est choisie parmi les polyoléfines telles que le polyéthylène ou polypropylène, par exemple modifiées à l'anhydride maléique, EVOH, EVA, les polyuréthannes et les polyesters.

7. Tuyau selon l'une des revendications précédentes, caractérisé en ce qu'il comprend une couche (16) de caoutchouc ou d'élastomère vulcanisable recouvrant la couche de protection (12) ou interposée entre la couche interne (10) et la couche de protection (12).

8. Tuyau selon la revendication 7, caractérisé en ce que l'élastomère vulcanisable est choisi parmi CSM, ECO, CR, NBR, HNBR, XNBR, POE ou EPDM.

9. Tuyau selon la revendicatin 7 ou 8, caractérisé en ce que l'épaisseur de la couche (16) d'élastomère vulcanisable est inférieure ou égale à 3 mm.

10. Tuyau selon l'une des revendications 1 à 9, caractérisé en ce qu'il comprend un film (18) d'un agent adhérisant entre ladite couche interne (10) et la couche de protection (12).

## Patentansprüche

1. Kraftstofführendes Rohr, insbesondere für ein Kraftfahrzeug,
umfassend eine dünne Innenschicht (10) aus einem thermoplastischen Material, welches hinsichtlich des Kraftstoffs gute Eigenschaften bezüglich der Undurchlässigkeit und der chemischen Festigkeit aufweist, und eine diese Innenschicht bedekkende Schutzschicht (12),
dadurch **gekennzeichnet,**
daß die Schutzschicht (12) aus einem vernetzbaren thermoplastischen Material besteht.

2. Rohr nach Anspruch 1,
dadurch **gekennzeichnet,**
daß seine Gesamtdichte zwischen ca. 1 und ca. 3,5 mm liegt, wobei die Dicke der Innenschicht (10) aus dem thermoplastischen Material im Bereich 0,1-0,5 mm liegt.

3. Rohr nach Anspruch 1 oder 2,
dadurch **gekennzeichnet,**
daß das vernetzbare thermoplastische Material PVC oder Polyethylen ist.

4. Rohr nach einem der vorhergehenden Ansprüche,
dadurch **gekennzeichnet,**
daß die Innenschicht aus einem Polyamid, beispielsweise PA 11, PA 12, PA 6 oder PA 66, einem Polyester, beispielsweise PET oder PBT, oder einer Fluorverbindung, beispielsweise PTFE, PFA oder FEP, besteht.

5. Rohr nach einem der vorhergehenden Ansprüche,
dadurch **gekennzeichnet,**
daß es eine aus einem Polymer bestehende Zwischenschicht (14) umfaßt, welche die Haftung zwischen der Innenschicht (10) und der Schutzschicht (12) verbessert und eine Alkoholbarriere bildet.

6. Rohr nach Anspruch 5,
dadurch **gekennzeichnet,**
daß das Material der Zwischenschicht (14) ausgewählt ist aus beispielsweise mit Maleinsäureanhydrid modifizierten Polyolefinen, wie z.B. Polyethylen oder Polypropylen, EVOH, EVA, Polyurethanen und Polyestern.

7. Rohr nach einem der vorhergehenden Ansprüche,
dadurch **gekennzeichnet,**
daß es eine Schicht (16) aus Gummi. oder einem vulkanisierbaren Elastomer umfaßt, welches die Schutzschicht (12) bedeckt oder zwischen der Innenschicht (10) und der Schutzschicht (12) angeordnet ist.

8. Rohr nach Anspruch 7,
dadurch **gekennzeichnet,**
daß das vulkanisierbare Elastomer ausgewählt ist aus CSM, ECO, CR, NBR, HNBR, XNBR, POE oder EPDM.

9. Rohr nach Anspruch 7 oder 8,
dadurch **gekennzeichnet,**
daß die Dicke der Schicht (16) aus dem vulkanisierbaren Elastomer kleiner oder gleich 3 mm ist.

10. Rohr nach einem der Ansprüche 1 bis 9,
dadurch **gekennzeichnet,**
daß es zwischen der Innenschicht (10) und der Schutzschicht (12) einen Haftmittelfilm (18) umfaßt.

## Claims

1. Pipe for conveying fuel, in particular for a motor vehicle, including a thin inner layer (10) of a thermoplastic material which has good properties of imperviousness and of chemical resistance to the fuel, and a protective layer (12) covering this inner layer, characterized in that the said protective layer (12) is made of crosslinkable thermoplastic material.

2. Pipe according to Claim 1, characterized in that its total thickness is approximately between 1 and 3.5 mm, the thickness of the inner layer (10) of thermoplastic material being of the order of 0.1-0.5 mm.

3. Pipe according to Claim 1 or 2, characterized in that the said crosslinkable thermoplastic material is PVC or polyethylene.

4. Pipe according to one of the preceding claims, characterized in that the inner layer is made of polyamide, for example PA 11, PA 12, PA 6 or PA 66, or else a polyester, for example PET or PBT, or of a fluorinated compound, for example PTFE, PFA or FEP.

5. Pipe according to one of the preceding claims, characterized in that it includes an intermediate layer (14) of a polymer improving the adhesiveness between the inner layer (10) and the protective layer (12) and forming a barrier to alcohol.

6. Pipe according to Claim 5, characterized in that the material of the intermediate layer (14) is chosen from polyolefins such as polyethylene or polypropylene, for example modified with maleic anhydride, EVOH, EVA, polyurethanes and polyesters.

7. Pipe according to one of the preceding claims, characterized in that it includes a layer (16) of rubber or of vulcanizable elastomer covering the protective layer (12) or placed between the inner layer (10) and the protective layer (12).

8. Pipe according to Claim 7, characterized in that the vulcanizable elastomer is chosen from CSM, ECO, CR, NBR, HNBR, XNBR, POE or EPDM.

9. Pipe according to Claim 7 or 8, characterized in that the thickness of the layer (16) of vulcanizable elastomer is lower than or equal to 3 mm.

10. Pipe according to one of Claims 1 to 9, characterized in that it includes a film (18) of an adhesion-promoting agent between the said inner layer (10) and the protective layer (12).
